# EUROPEAN PATENT APPLICATION

(11) **EP 4 651 323 A1**
(43) Date of publication of application: **19.11.2025**
(21) Application number: 25155762.5
(22) Date of filing: 04.02.2025
(51) Int. Cl.: H02G 3/00, B25J 11/00, H01R 13/631

(54) **CONNECTOR STAGING SYSTEM AND METHOD**

(30) Priority: 14.05.2024 US 202463647235 P; 23.07.2024 US 202463674409 P; 28.01.2025 US 202519038879
(71) Applicant: Aptiv Technologies AG, 8200 Schaffhausen (CH)
(72) Inventor: LEWIS, Ryan, 8200 Schaffhausen (CH); PETERSON, David R., 8200 Schaffhausen (CH); SUDIK JR., Joseph, 8200 Schaffhausen (CH)
(74) Representative: Bardehle Pagenberg Partnerschaft mbB Patentanwälte Rechtsanwälte

(57) **Abstract**

A staging system (10) for robotically engaging a connector (12) to facilitate assembly of the connector in a vehicle includes a substrate (14) and an installation subassembly (16). The installation subassembly (16) is configured to be removably-coupled to the substrate (14) to facilitate robotic engagement of the connector (12). The installation subassembly (16) includes a primary component (26) and a secondary component (28) adjustably-coupled to the primary component.

## Description

### CROSS-REFERENCE TO RELATED APPLICATIONS

This application claims priority to U.S. Provisional Application No. 63/647,235 filed May 14, 2024 and U.S. Provisional Application No. 63/674,409 filed July 23, 2024. The entire disclosures of the above applications are incorporated by reference.

### FIELD

The present disclosure relates to a connector staging system and method, and more particularly to a system and method for staging a connector for robotic installation.

### BACKGROUND

Modern vehicles (e.g., automobiles) rely on electrical wiring and electrical connections to facilitate the transmission of electricity within, and between various components of, the vehicle. Connection systems (e.g., connectors and terminals) play an important role in ensuring the integrity of these electrical connections and the reliability and performance of the vehicle. Some connectors include features (e.g., integrally-molded features) to facilitate the accurate and repeatable handling, positioning, and securement of the connectors and/or other components during an assembly process. Often, these features require complex mold tooling, which can increase the cost and complexity of the connector. In view of the foregoing, while known connector staging systems and methods for vehicle connection systems have proven acceptable for their intended purpose, a continuous need for improvement remains in the pertinent art to address the challenges associated with accurate and efficient assembly of the connectors.

The background description provided here is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

### SUMMARY

This section provides a general summary of the disclosure, and is not a comprehensive disclosure of its full scope or all of its features.

One aspect of the disclosure provides a staging system for robotically engaging a connector to facilitate assembly of the connector in a vehicle. The staging system includes a substrate and an installation subassembly. The installation subassembly is configured to be removably-coupled to the substrate to facilitate robotic engagement of the connector. The installation subassembly includes a primary component and a secondary component adjustably-coupled to the primary component.

Another aspect of the present disclosure provides a method of assembling a connector assembly. The method includes coupling the connector assembly to an installation subassembly. The installation subassembly is configured to be removably-coupled to a substrate. The installation subassembly includes a primary component and a secondary component. The secondary component is adjustably-coupled to the primary component. The method further includes coupling the installation subassembly to the substrate.

The details of one or more implementations of the disclosure are set forth in the accompanying drawings and the description below. Other aspects, features, and advantages will be apparent from the description and drawings, and from the claims.

### BRIEF DESCRIPTION OF THE DRAWINGS

The present disclosure will become more fully understood from the detailed description and the accompanying drawings.
FIG. 1 is a top perspective view of an example connector staging system in various stages of assembly in accordance with the principles of the present disclosure.
FIG. 2 is a bottom perspective view of the connector staging system of FIG. 1 in an assembled configuration.
FIG. 3 is a perspective view of a robotic installation subassembly of the connector staging system of FIG. 1 in accordance with the principles of the present disclosure.
FIG. 4 is a top perspective view of another example connector staging system in an assembled configuration in accordance with the principles of the present disclosure.
FIG. 5 is a bottom perspective view of the connector staging system of FIG. 4.
FIG. 6 is a perspective view of a robotic installation subassembly of the connector staging system of FIG. 4 in accordance with the principles of the present disclosure.

In the drawings, reference numbers may be reused to identify similar and/or identical elements.

### DETAILED DESCRIPTION

Example configurations will now be described more fully with reference to the accompanying drawings. Example configurations are provided so that this disclosure will be thorough, and will fully convey the scope of the disclosure to those of ordinary skill in the art. Specific details are set forth such as examples of specific components, devices, and methods, to provide a thorough understanding of configurations of the present disclosure. It will be apparent to those of ordinary skill in the art that specific details need not be employed, that example configurations may be embodied in many different forms, and that the specific details and the example configurations should not be construed to limit the scope of the disclosure.

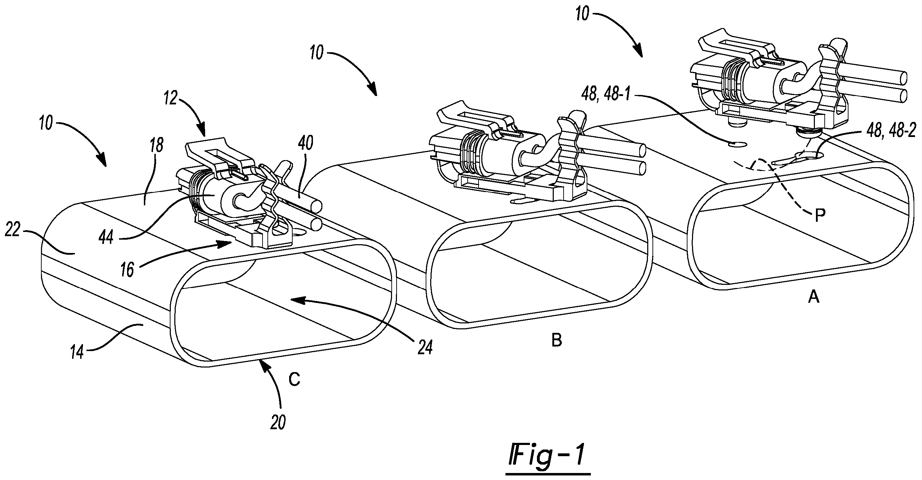

With reference to FIGS. 1-2, a connector staging system 10 is shown. As will be explained in more detail below, the connector staging system 10 is used during the installation of a connector assembly 12 within a vehicle (e.g., an automobile, not shown) to facilitate the transmission of electricity between various components (e.g., batteries, lights, etc.) of the vehicle. For example, the connector assembly 12 may be a male or female connector detachably couplable to a mating connector (e.g., a male or female connector, not shown) such that, during operation the connector assembly 12, electricity is transmitted through the connector assembly 12 and to various electronic components within the vehicle.

The connector staging system 10 may include a substrate 14 and an installation subassembly 16. The substrate 14 may include a first side 18 (e.g., top side) and a second side 20 (e.g., bottom side) opposite the first side 18. The first side 18 may be connected to the second side 20 by one or more sidewalls 22. In some implementations, the sidewalls 22 are curved. The first side 18, the second side 20, and the one or more sidewalls 22 may define an opening 24 extending through the substrate 14. For example, the substrate 14 may be hollow. In some implementations, the opening 24 may be rectangular (or rectangular with curved/chamfered corners) in shape.

The installation subassembly 16 may be removably and/or adjustably coupled to the substrate 14 such that the connector assembly 12 can be repeatably and accurately positioned onto the substrate 14 (e.g., the first side 18 of the substrate 14) and/or wiring assembly channels to facilitate automatic (e.g., robotic) installation and/or assembly of wiring harnesses, including the connector assembly 12.

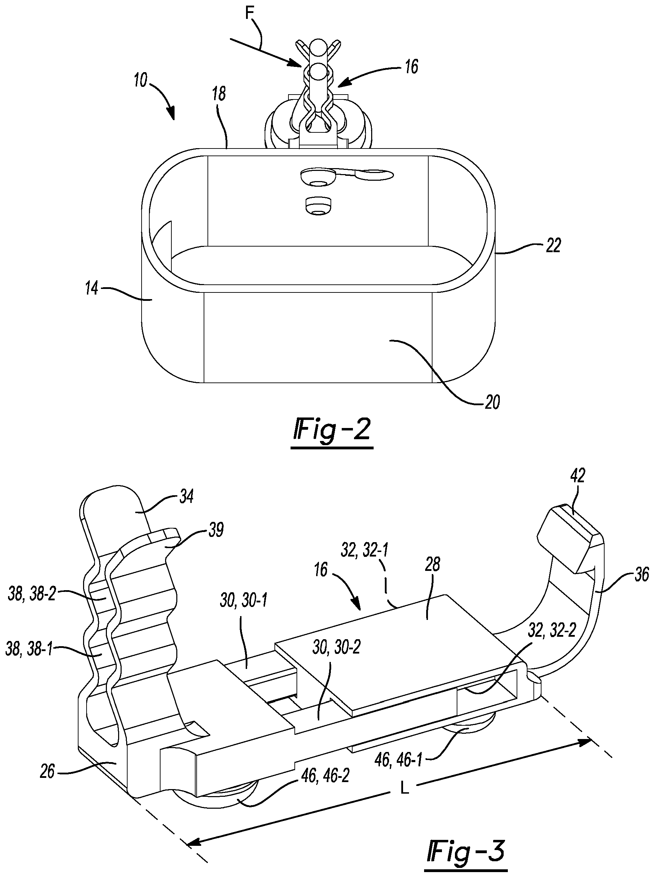

With reference to FIG. 3, the installation subassembly 16 may include a primary component 26 and a secondary component 28. The primary component 26 may be adjustably (e.g., slidably, translatably, etc.) coupled to the secondary component 28 such that a length L of the installation subassembly 16 can be increased and/or decreased to accommodate connectors (e.g., connector assembly 12) and/or components of various sizes, lengths, etc. The primary component 26 may include one or more protrusions 30. For example, the primary component 26 may include a first protrusion 30-1 and a second protrusion 30-2 spaced apart from the first protrusion 30-1. The one or more protrusions 30 may be rectangular in shape. The secondary component 28 may include one or more slots 32 configured to at least partially receive the one or more protrusions 30. For example, the secondary component 28 may include a first slot 32-1 configured to receive the first protrusion 30-1 and a second slot 32-2 configured to receive the second protrusion 30-2. The length L of the installation subassembly 16 may be increased and/or decreased by changing a distance that the one or more protrusions 30 are disposed within the one or more slots 32.

The primary component 26 may include a first biasing member 34 to facilitate securing the connector assembly 12 to the installation subassembly 16. The secondary component 28 may include a second biasing member 36 to facilitate securing the connector assembly 12 to the installation subassembly 16. One or both of the biasing members 34, 36 may engage the connector assembly 12. In this regard, the first and second biasing members 34, 36 may be disposed at opposite ends of the installation subassembly 16.

The first biasing member 34 may include one or more apertures 38. The apertures 38 may be configured to receive one or more wires 40 (e.g., electrical wires; FIG. 1) of the connector assembly 12. For example, a first aperture 38-1 may be configured to receive a first wire 40 and a second aperture 38-2 may be configured to receive a second wire 40. The apertures 38 may be defined by one or more sides (e.g., arms) 39 of the first biasing member 34. The one or more sides 39 may act as springs to hold the wires in the apertures 38. In some implementations, the first biasing member 34 (e.g., the one or more sides 39) applies a force F (FIG. 2) on the one or more wires 40. In some implementations, the second biasing member 36 may include a first surface (e.g., end) 42 configured to engage a body 44 (FIG. 1) of the connector assembly 12.

Referring now to FIGS. 1-3, in some implementations, the installation subassembly 16 is coupled to the substrate 14 in a snap-fit arrangement. For example, the installation subassembly 16 may include one or more mating features 46 (e.g., protrusions, pins, rivets, etc.) that are received by one or more corresponding mating features 48 (e.g., channels, slots, apertures, holes, keyholes etc.) formed in the substrate 14. The mating features 46 may define a distance therebetween. Similarly, the corresponding mating features 48 may define a distance therebetween. The distance between the corresponding mating features 48 may correspond to (e.g., be equal to) the distance between the mating features 46. In this regard, the distance between the mating features 46 may be adjusted (e.g., by adjusting how much of the protrusions 30 are disposed within the slots 32).

In some implementations, the one or more mating features 46 includes a pin 46-1 and a rivet 46-2, and the one or more corresponding mating features 48 includes a hole 48-1 and a slot 48-2. The pin 46-1 may be coupled to the secondary component 28. The rivet 46-2 may be coupled to the primary component 26. The distance between the pin 46-1 and the rivet 46-2 may be changed by, e.g., sliding the primary component 26 relative to the secondary component 28.

In an assembled configuration (Position C in FIG. 1), the pin 46-1 may be disposed within the hole 48-1 in the substrate 14, while the rivet 46-2 on the installation subassembly 16 may be disposed within the slot 48-2 in the substrate 14. The slot 48-2 may define a predetermined angular path P within the substrate 14 to facilitate attaching and detaching the installation subassembly 16 from the substrate 14.

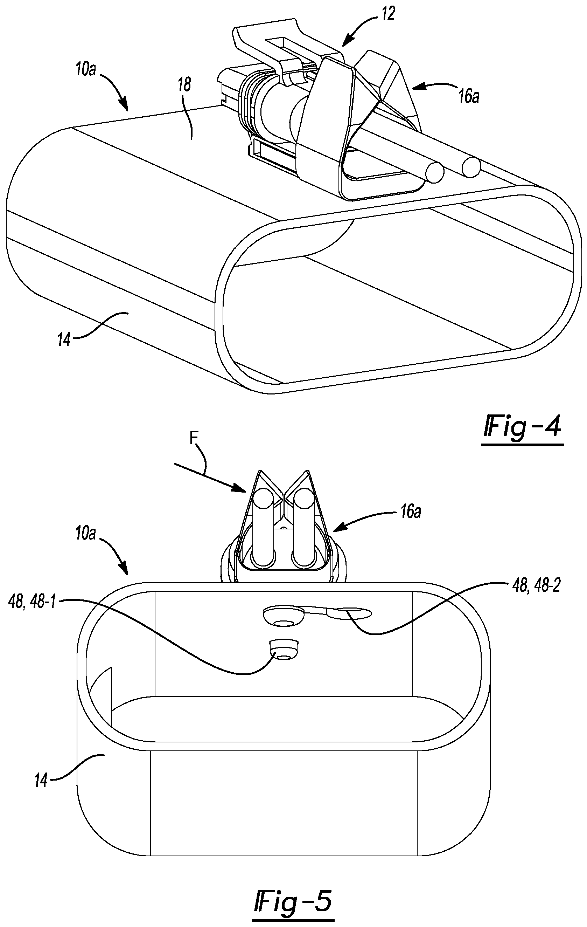

Referring to FIGS. 4-5, another connector staging system 10a is shown. The connector staging system 10a may include the substrate 14 and an installation subassembly 16a. In view of the substantial similarity in structure and function of the components associated with the connector staging system 10a relative to the connector staging system 10, like reference numerals are used hereinafter and in the drawings to identify like components while like reference numerals containing letter extensions (e.g., "a") are used to identify those components that have been modified.

The installation subassembly 16a may be removably and/or adjustably coupled to the substrate 14 such that the connector assembly 12 can be repeatably and accurately positioned onto the substrate 14 (e.g., the first side 18 of the substrate 14) and/or wiring assembly channels to facilitate automatic (e.g., robotic) installation and/or assembly of wiring harnesses, including the connector assembly 12.

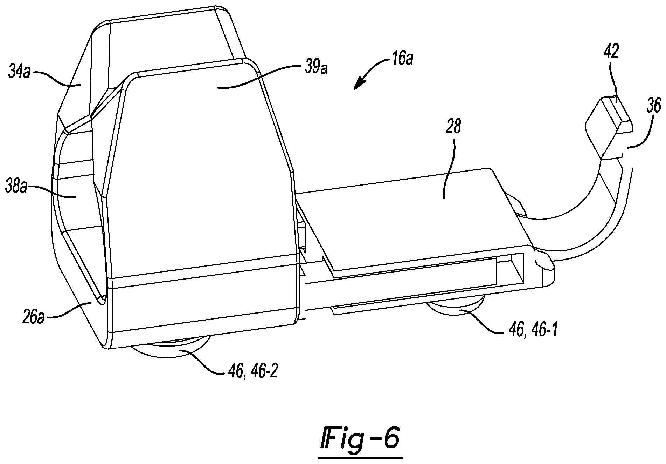

With reference to FIGS. 5-6, the installation subassembly 16a may include a primary component 26a and the secondary component 28. The primary component 26a may be adjustably (e.g., slidably, translatably, etc.) coupled to the secondary component 28 such that the length L of the installation subassembly 16a can be increased and/or decreased to accommodate connectors (e.g., connector assembly 12) and/or components of various lengths. The primary component 26a may differ from the primary component 26 in that the first biasing member 34a of the primary component 26a may include only one aperture 38a. The aperture 38a may be configured to receive one or more wires 40 (e.g., electrical wires; FIG. 1) of the connector assembly 12 (FIG. 4). For example, the aperture 38a may receive at least two wires 40. Though the aperture 38a is shown as receiving two wires 40, it is conceivable that the aperture 38a could receive any number of wires 40 without departing from the scope of the present disclosure. The aperture 38a may be defined by one or more sides 39a of the first biasing member 34a. The one or more sides 39a may act as springs to hold the wires in the aperture 38a. In some implementations, the first biasing member 34a (e.g., the aperture 38a) applies a force F on the one or more wires 40. In some implementations, the second biasing member 36 may include a first surface 42 configured to engage a body 44 (FIG. 1) of the connector assembly 12.

A method of assembling the connector assembly 12 to, e.g., a vehicle (not shown) may include (i) coupling the connector assembly 12 to the installation subassembly 16, 16a, (ii) coupling the installation subassembly 16, 16a to the substrate 14, (iii) removing the connector assembly 12 and/or the installation subassembly 16, 16a from the substrate 14, (iv) coupling the connector assembly 12 and/or the installation subassembly 16, 16a to a vehicle, and/or (v) removing the connector assembly 12 from the installation subassembly 16, 16a.

In some implementations, coupling the installation subassembly 16, 16a to the substrate 14 includes rotating the installation subassembly 16, 16a in a first (e.g., clockwise) direction along the predetermined angular path P. In some implementations, coupling the installation subassembly 16, 16a to the substrate 14 includes receiving, by one or more corresponding mating features 48 (e.g., channels, slots, apertures, holes, keyholes etc.) formed in the substrate 14, the one or more mating features 46 (e.g., protrusions, pins, rivets, etc.) of the installation subassembly 16, 16a.

In some implementations, removing the installation subassembly 16, 16a from the substrate 14 includes rotating the installation subassembly 16, 16a in a second (e.g., counterclockwise) direction along the predetermined angular path P. The second direction may be opposite the first direction.

In some implementations, the method may be performed automatically and/or by a robot (not shown). In particular, a robot may engage the connector assembly 12 and/or the installation subassembly 16, 16a to remove the connector assembly 12 from the installation subassembly 16, 16a and/or remove the installation subassembly 16, 16a from the substrate 14. Similarly, the robot may couple the connector assembly 12 to a vehicle. In some implementations, the robot may rotate the installation subassembly 16, 16a along the predetermined angular path P in order to remove the installation subassembly 16, 16a from the substrate 14.

In some implementations, removing the installation subassembly 16, 16a from the substrate 14 includes rotating the installation subassembly 16, 16a in a second (e.g., counterclockwise) direction along the predetermined angular path P.

The foregoing description is merely illustrative in nature and is in no way intended to limit the disclosure, its application, or uses. The broad teachings of the disclosure can be implemented in a variety of forms. Therefore, while this disclosure includes particular examples, the true scope of the disclosure should not be so limited since other modifications will become apparent upon a study of the drawings, the specification, and the following claims. In the written description and claims, one or more steps within a method may be executed in a different order (or concurrently) without altering the principles of the present disclosure. Similarly, one or more instructions stored in a non-transitory computer-readable medium may be executed in a different order (or concurrently) without altering the principles of the present disclosure. Unless indicated otherwise, numbering or other labeling of instructions or method steps is done for convenient reference, not to indicate a fixed order.

Further, although each of the embodiments is described above as having certain features, any one or more of those features described with respect to any embodiment of the disclosure can be implemented in and/or combined with features of any of the other embodiments, even if that combination is not explicitly described. In other words, the described embodiments are not mutually exclusive, and permutations of one or more embodiments with one another remain within the scope of this disclosure.

The terminology used herein is for the purpose of describing particular exemplary configurations only and is not intended to be limiting. As used herein, the singular articles "a," "an," and "the" may be intended to include the plural forms as well, unless the context clearly indicates otherwise. The terms "comprises," "comprising," "including," and "having," are inclusive and therefore specify the presence of features, steps, operations, elements, and/or components, but do not preclude the presence or addition of one or more other features, steps, operations, elements, components, and/or groups thereof. The method steps, processes, and operations described herein are not to be construed as necessarily requiring their performance in the particular order discussed or illustrated, unless specifically identified as an order of performance. Additional or alternative steps may be employed.

Spatial and functional relationships between elements (for example, between modules, circuit elements, semiconductor layers, etc.) are described using various terms, including "connected," "engaged," "coupled," "adjacent," "proximate," "next to," "on top of," "above," "below," and "disposed." Unless explicitly described as being "direct," when a relationship between first and second elements is described in the above disclosure, that relationship encompasses a direct relationship where no other intervening elements are present between the first and second elements as well as an indirect relationship where one or more intervening elements are present between the first and second elements. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

The term "set" does not necessarily exclude the empty set - in other words, in some circumstances a "set" may have zero elements. The term "non-empty set" may be used to indicate exclusion of the empty set - in other words, a non-empty set will always have one or more elements. The term "subset" does not necessarily require a proper subset. In other words, a "subset" of a first set may be coextensive with (equal to) the first set. Further, the term "subset" does not necessarily exclude the empty set - in some circumstances a "subset" may have zero elements.

The terms first, second, third, etc. may be used herein to describe various elements, components, regions, layers and/or sections. These elements, components, regions, layers and/or sections should not be limited by these terms. These terms may be only used to distinguish one element, component, region, layer or section from another region, layer or section. Terms such as "first," "second," and other numerical terms do not imply a sequence or order unless clearly indicated by the context. Thus, a first element, component, region, layer or section discussed below could be termed a second element, component, region, layer or section without departing from the teachings of the example configurations.

The phrase "at least one of A, B, and C" should be construed to mean a logical (A OR B OR C), using a non-exclusive logical OR, and should not be construed to mean "at least one of A, at least one of B, and at least one of C." The phrase "at least one of A, B, or C" should be construed to mean a logical (A OR B OR C), using a non-exclusive logical OR.

The following Clauses provide an exemplary configuration for a staging system, as described above.

Clause 1: A staging system for robotically engaging a connector to facilitate assembly of the connector in a vehicle, the staging system comprising: a substrate; and an installation subassembly configured to be removably-coupled to the substrate to facilitate robotic engagement of the connector, the installation subassembly including a primary component and a secondary component adjustably-coupled to the primary component.

Clause 2: The staging system of clause 1, further comprising the connector coupled to the installation subassembly in a position relative to the substrate, wherein the position of the connector relative to the substrate is configured to facilitate robotic assembly of the connector.

Clause 3: The staging system of clause 1 or clause 2, wherein: the primary component includes a first biasing member; the secondary component includes a second biasing member; and the first biasing member and the second biasing member are configured to engage a connector.

Clause 4: The staging system of clause 3, wherein the second biasing member includes a first surface configured to engage the connector.

Clause 5: The staging system of clause 3 or clause 4, wherein the first biasing member includes a first aperture configured to receive a first wire coupled to the connector.

Clause 6: The staging system of clause 5, wherein the first biasing member includes a second aperture arranged above the first aperture and configured to receive a second wire coupled to the connector.

Clause 7: The staging system of clause 5 or clause 6, wherein the first biasing member includes a first side and a second side spaced apart from the first side and defining the first aperture.

Clause 8: The staging system of clause 7, wherein the first and second sides are configured to engage the first wire.

Clause 9: The staging system of clause 7 or clause 8, wherein the first aperture is configured to receive a second wire coupled to the connector.

Clause 10: The staging system of any of clauses 3 through 9, wherein the first biasing member is disposed at a first end of the installation subassembly, the second biasing member is disposed at a second end of the installation subassembly, and the first end is opposite the second end.

Clause 11: The staging system of any of clauses 1 through 10, wherein: the primary component includes a first protrusion and a second protrusion spaced apart from the first protrusion; and the secondary component includes a first slot and a second slot, the first slot configured to at least partially receive the first protrusion, the second slot configured to receive the second protrusion.

Clause 12: The staging system of clause 11, wherein the first protrusion is configured to translate in the first slot, and the second protrusion is configured to translate in the second slot.

Clause 13: The staging system of any of clauses 1 through 12, wherein the installation subassembly includes a first mating feature, and the substrate includes a second mating feature configured to receive the first mating feature.

Clause 14: The staging system of clause 13, wherein the second mating feature is configured to rotatably-receive the first mating feature.

Clause 15: The staging system of clause 14, wherein the installation subassembly includes a third mating feature, and the substrate includes a fourth mating feature configured to receive the third mating feature.

Clause 16: The staging system of clause 15, wherein the fourth mating feature is configured to translatably-receive the third mating feature.

Clause 17: The staging system of clause 16, wherein the fourth mating feature defines a predetermined angular path within the substrate to facilitate robotically removing the installation subassembly from the substrate.

Clause 18: The staging system of clause 16 or clause 17, wherein one of the first mating feature or the second mating feature includes a first protrusion, and the other of the first mating feature or the second mating feature includes a first aperture configured to rotatably-receive the first protrusion, and wherein one of the third mating feature or the fourth mating feature includes a second protrusion, and the other of the third mating feature or the fourth mating feature includes a first slot configured to translatably-receive the second protrusion.

Clause 19: The staging system of any of clauses 15 through 18, wherein a distance between the first mating feature and the second mating feature is equal to a distance between the third mating feature and the fourth mating feature.

Clause 20: The staging system of clause 19, wherein the distance between the first mating feature and the second mating feature is adjustable based on a size of a connector.

Clause 21: A method of assembling a connector assembly, the method comprising: coupling the connector assembly to an installation subassembly, the installation subassembly configured to be removably-coupled to a substrate, the installation subassembly including a primary component and a secondary component adjustably-coupled to the primary component; and coupling the installation subassembly to the substrate.

Clause 22: The method of clause 21, wherein: the installation subassembly includes a first mating feature coupled to the primary component and a second mating feature; and the substrate includes a first corresponding mating feature configured to receive the first mating feature and a second corresponding mating feature configured to receive the second mating feature.

Clause 23: The method of clause 22, wherein: the first corresponding mating feature defines a predetermined angular path within the substrate; and coupling the installation subassembly to the substrate includes rotating the installation subassembly in a first direction along the predetermined angular path.

Clause 24: The method of clause 23, further comprising removing the installation subassembly from the substrate by rotating the installation subassembly in a second direction opposite the first direction along the predetermined angular path.

Clause 25: The method of clause 24, further comprising removing the connector assembly from the installation subassembly.

## Claims

1. A staging system (10) for robotically engaging a connector (12) to facilitate assembly of the connector in a vehicle, the staging system (10) comprising:
a substrate (14); and
an installation subassembly (16) configured to be removably-coupled to the substrate (14) to facilitate robotic engagement of the connector (12), the installation subassembly (16) including a primary component (26) and a secondary (28) component adjustably-coupled to the primary component (26).

2. The staging system (10) of claim 1, further comprising the connector (12) coupled to the installation subassembly (16) in a position relative to the substrate (14), wherein the position of the connector (12) relative to the substrate (14) is configured to facilitate robotic assembly of the connector (12).

3. The staging system (10) of claim 1 or 2, wherein:
the primary component (26) includes a first biasing member (34);
the secondary component (28) includes a second biasing member (36); and
the first biasing member (34) and the second biasing member (36) are configured to engage a connector (12).

4. The staging system (10) of claim 3, wherein the second biasing member (36) includes a first surface (42) configured to engage the connector.

5. The staging system (10) of claim 3 or 4, wherein the first biasing member (34) includes a first aperture (38-1) configured to receive a first wire (40) coupled to the connector (12), wherein preferably the first biasing member (34) includes a second aperture (38-2) arranged above the first aperture (38-1) and configured to receive a second wire (40) coupled to the connector.

6. The staging system (10) of claim 5, wherein the first biasing member (34) includes a first side and a second side spaced apart from the first side and defining the first aperture (38-1), wherein preferably the first and second sides are configured to engage the first wire (40).

7. The staging system (10) of claim 6, wherein the first aperture (38-1) is configured to receive a second wire (40) coupled to the connector.

8. The staging system (10) of claim 3 or of any one of the preceding claims in combination with claim 3, wherein the first biasing member (34) is disposed at a first end of the installation subassembly (16), the second biasing member (36) is disposed at a second end of the installation subassembly (16), and the first end is opposite the second end.

9. The staging system (10) of any one of the preceding claims, wherein:
the primary component (26) includes a first protrusion (30-1) and a second protrusion (30-2) spaced apart from the first protrusion (30-1); and
the secondary component (28) includes a first slot (32-1) and a second slot (32-2), the first slot (32-1) configured to at least partially receive the first protrusion (30-1), the second slot (32-2) configured to receive the second protrusion (30-2).

10. The staging system (10) of claim 9, wherein the first protrusion (30-1) is configured to translate in the first slot (31-1), and the second protrusion (30-2) is configured to translate in the second slot (31-2).

11. The staging system (10) of any one of the preceding claims, wherein the installation subassembly (16) includes a first mating feature (46), and the substrate includes a second mating feature (48) configured to receive the first mating feature, wherein preferably the second mating feature (48) is configured to rotatably-receive the first mating feature (46).

12. The staging system (10) of claim 11, wherein the installation subassembly (16) includes a third mating feature (46), and the substrate includes a fourth mating feature (48) configured to receive the third mating feature (46), wherein preferably the fourth mating feature (48) is configured to translatably-receive the third mating feature (46).

13. The staging system (10) of claim 12, wherein the fourth mating feature (48) defines a predetermined angular path within the substrate (14) to facilitate robotically removing the installation subassembly (16) from the substrate (14).

14. The staging system (10) of claim 12, wherein one of the first mating feature (46) or the second mating feature (48) includes a first protrusion, and the other of the first mating feature (46) or the second mating feature (48) includes a first aperture configured to rotatably-receive the first protrusion, and wherein one of the third mating feature (46) or the fourth mating feature (48) includes a second protrusion, and the other of the third mating feature (46) or the fourth mating feature (48) includes a first slot configured to translatably-receive the second protrusion.

15. The staging system (10) of claim 12 or of any one of the preceding claims in combination with claim 12, wherein a distance between the first mating feature (46) and the second mating feature (48) is equal to a distance between the third mating feature (46) and the fourth mating feature (48), wherein preferably the distance between the first mating feature (46) and the second mating feature (48) is adjustable based on a size of a connector.
